# EUROPEAN PATENT APPLICATION

(11) **EP 3 073 799 A1**
(43) Date of publication of application: **28.09.2016**
(21) Application number: 14797566.8
(22) Date of filing: 26.05.2014
(51) Int. Cl.: H04W 88/18

(54) **METHOD AND APPARATUS FOR NOTIFYING/TRIGGERING CALL FORWARDING/DEFLECTION SERVICE**

(30) Priority: 18.11.2013 CN 201310578537
(71) Applicant: ZTE Corporation, Shenzhen, Guangdong 518057 (CN)
(72) Inventor: LIU, Jingxiang, Shenzhen Guangdong 518057 (CN); ZOU, Changle, Shenzhen Guangdong 518057 (CN); CAO, Xiaofei, Shenzhen Guangdong 518057 (CN)
(74) Representative: Lavoix
(86) International application number: PCT/CN2014/078460
(87) International publication number: WO 2014/183703

(57) **Abstract**

Disclosed are a method and an apparatus for notifying/triggering a call forwarding/deflection service. The notification method comprises: a mobile switching center (MSC) receiving a first message that is sent by a celled user equipment (UE) and carries information indicating that the called UE is in a busy state; sending, to a service centralization and continuity application server (SCC AS), a second message that carries the information indicating that the called UE is in a busy stating, and instructing a supplementary service application server (AS) to trigger a call forwarding service; or the MSC receiving a third message that is sent by a called UE and carries a call deflection number; sending, to an SCC AS, a fourth message that carries the call deflection number, and instructing a supplementary service AS to trigger a call deflection service. The present invention further provides an apparatus for notifying/triggering a call forwarding/deflection service.

## Description

### TECHNICAL FIELD

The disclosure relates to the field of communications, and in particular to a notification/triggering method and device for a Call Forwarding on Busy/Call Deflection (CFB/CD) service.

### BACKGROUND

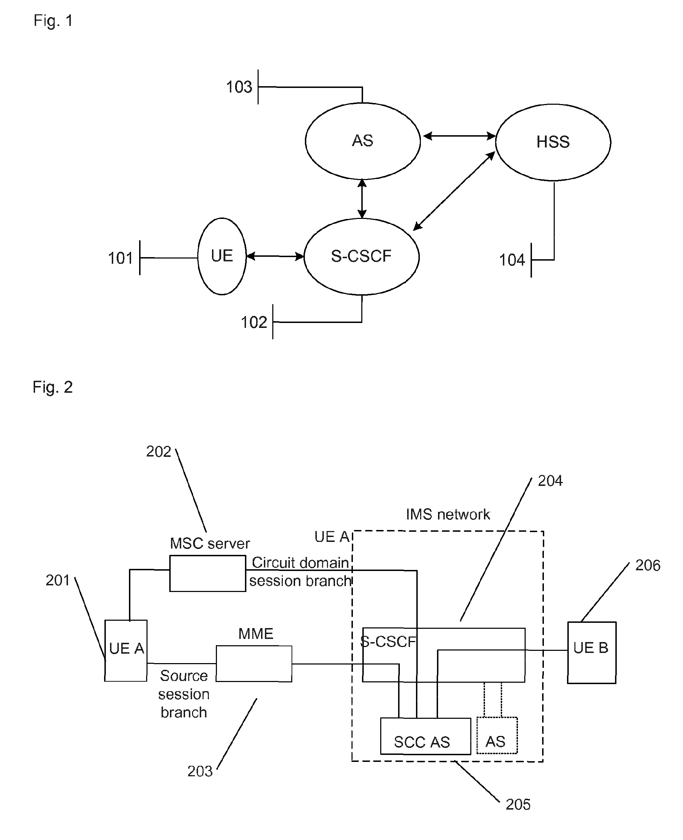

An IP Multimedia Subsystem (IMS) network is a multimedia service form developed by the 3rd Generation Partnership Project (3GPP) to achieve adaptability to a continuously developed telecommunication technology and meet a market requirement, and it is constructed on the basis of an IP network and employs an IP bearer as a bearer channel for its control signalling and media transmission. An IMS, which uses a Session Initiation Protocol (SIP) as control signalling and has characteristics such as separation of bearer and control, access independence and the like as well as a capability in providing a unified multimedia service for users in different networks, is an evolution direction of a conventional telecommunication network. Fig. 1 shows the structure of an IMS network.

The IMS network may provide a CFB service for a user, and when a user receives a new call, if the user returns a current busy state, User Equipment (UE) returns a 486 message, and an Application Server (AS) which processes a supplementary service sends an INVITE message to a user of a forwarding party according to user subscription after receiving the 486 message.

The IMS network may also provide a Call Deflection (CD) service for the user, the called UE sends a 302 Moved Temporarily message when the user receives a new call, and carries an address of a CD party through a Contact header field, and the AS which processes the supplementary service forwards the call to the CD party after receiving the 302 Moved Temporarily message.

UE in an IMS network may switch an ongoing conversation to a Circuit Switch (CS) network due to network coverage, and a Mobile Switch Centre (MSC) server in the CS network provides switch service. Such a process is called Signal Radio Voice Call Continuity (SRVCC) switching. Fig. 2 is a network structure diagram for such switching. Specifically, UE A 201 is UE subjected to switching; an MSC server 202 is a switch server where UE A 201 is located after being switched to a CS network, and the server provides switching service for UE A 201, and provides a call control function after switching; and a Mobility Management Entity (MME) 203 is a management network element of UE A 201 in a packet switched domain. UE A 201 resides in the MME 203 before switching, and is connected to a Serving-Call Session Control Function (S-CSCF) 204 through an IP connection provided by the MME 203. When switching to the CS network is required, the MME 203 sends a switching request to the MSC server 202, and interacts with the MSC server 202 to implement a switching process; the S-CSCF 204 is an S-CSCF providing service for UE A 201; and a Service Centralization and Continuity Application Server (SCC AS) 205 is an AS providing call continuity service in the IMS network. In a switching process, the SCC AS 205 is responsible for implementing connection between a switched circuit domain session branch and a remote caller. The SCC AS 205 and a supplementary service AS providing a service logic for UE may be combined and separated; and UE B 206 is a remote terminal in conversation with UE A 201.

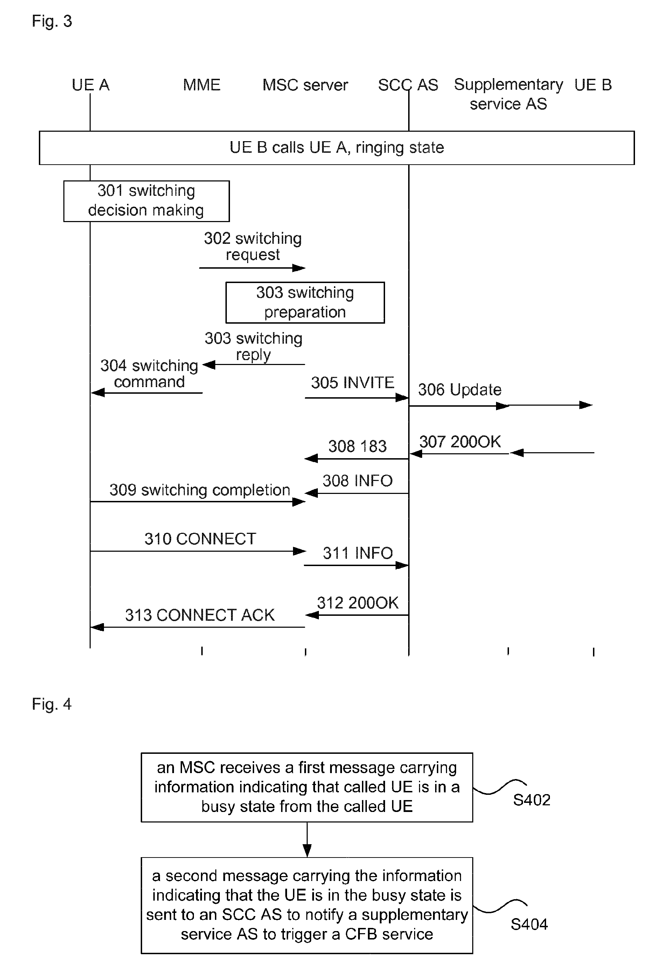

Fig. 3 shows a flow of SRVCC switching of UE in a called ringing state, and the flow includes the following steps.

Step 301: UE B calls UE A, and a call enters a ringing state.

Here, UE A in the ringing state performs switching decision making with an MME, and decides to be switched to a CS network.

Step 302: the MME sends a switching request message to an MSC server.

Step 303: the MSC server returns a switching reply to the MME after switching preparation.

Step 304: the MME sends a switching command to UE A, and UE A starts a process of access to a circuit domain.

Step 305: meanwhile, the MSC server sends an INVITE message to an SCC AS to request for establishing a media connection between the MSC server and UE B.

Here, a SIP is usually adopted between the MSC server and the SCC AS.

Step 306: the SCC AS sends an update message to UE B after receiving the INVITE message.

Here, the message between the SCC AS and UE B is required to be forwarded through an S-CSCF, and a forwarding process is omitted for simplification.

Step 307: UE B returns a 200OK message.

Here, the 200OK message carries media information of UE B.

Step 308: the SCC AS returns a 183 message to the MSC server, and then sends an INFO message to the MSC server.

Here, the INFO message notifies the MSC server that the current call is in the called ringing state.

Step 309: UE A sends a switching completion message to the MSC server after access to the circuit domain is completed.

Here, after UE A sends the switch completion message, it is indicated that switching is completed, and UE A is in a circuit-domain called ringing state.

Step 310: UE A answers the call, and sends a CONNECT message to the MSC server.

Step 311: the MSC server sends an INFO message to the SCC AS, and notifies the SCC AS that the call has been replied to.

Step 312: the SCC AS returns a 200OK message to the MSC server to complete a session establishment process with the MSC server.

Step 313: the MSC server sends a CONNECT ACK to UE A, and the call enters a connected state.

The problem in a related technology is that switched UE may initiate a CFB or CD service by sending a DISCONNECT message to an MSC in a circuit-domain called ringing state while the MSC which is a client in a conversation with an SCC AS may not send 486 and 302 messages according to CFB and CD service requirements of an IMS. Such a limit causes incapability of the switched UE in implementing the CD and CFB services.

For the above problem, there is yet no effective solution.

### SUMMARY

In order to solve the existing technical problem, the embodiment of the disclosure provides a notification/triggering method and device for a CFB/CD service.

According to one aspect of the embodiment of the disclosure, a notification method for a CFB/CD service is provided, which includes: when the CFB service is required, an MSC receives a first message carrying information indicating that called UE is in a busy state from the called UE; a second message carrying the information indicating that the called UE is in the busy state is sent to an SCC AS to notify a supplementary service AS to trigger the CFB service; or
when the CD service is required, the MSC receives a third message carrying a CD number from the called UE; and a fourth message carrying the CD number is sent to the SCC AS to notify the supplementary service AS to trigger the CD service.

According to one aspect of the embodiment of the disclosure, a triggering method for a CFB/CD service is provided, which includes: when the CFB service is required, an SCC AS receives a first message carrying information indicating that called UE is in a busy state from an MSC; a second message indicating that the called UE is in the busy state is sent to a supplementary service AS to notify the supplementary service AS to trigger the CFB service; or
when the CD service is required, the SCC AS receives a third message carrying a CD number from the MSC; and a fourth message carrying the CD number is sent to the supplementary service AS to notify the supplementary service AS to trigger the CD service.

According to another aspect of the embodiment of the disclosure, a notification device for a CFB/CD service is provided, which includes: a first receiving module and a first sending module, herein the first receiving module may be configured to, when the CFB service is required, receive a first message carrying information indicating that called UE is in a busy state from the called UE; the first sending module may be configured to send a second message carrying the information indicating that the called UE is in the busy state to an SCC AS to notify a supplementary service AS to trigger the CFB service; or
the device includes: a second receiving module and a second sending module, herein the second receiving module may be configured to, when the CD service is required, receive a third message carrying a CD number from the called UE; and the second sending module may be configured to send a fourth message carrying the CD number to the SCC AS to notify the supplementary service AS to trigger the CD service.

According to another aspect of the embodiment of the disclosure, a triggering device for a CFB/CD service is provided, which includes: a first receiving module and a first triggering module, herein the first receiving module may be configured to, when the CFB service is required, receive a first message carrying information indicating that called UE is in a busy state from an MSC; the first triggering module may be configured to send a second message indicating that the called UE is in the busy state to a supplementary service AS to notify the supplementary service AS to trigger the CFB service; or
the device includes: a second receiving module and a second triggering module, wherein the second receiving module may be configured to, when the CD service is required, receive a third message carrying a CD number from the MSC; and the second triggering module may be configured to send a fourth message carrying the CD number to the supplementary service AS to notify the supplementary service AS to trigger the CD service.

According to another aspect of the embodiment of the disclosure, a computer storage medium is provided, which has stored therein a set of instructions that, when executed, cause at least one processor to execute the abovementioned notification method for the CFB/CD service or the abovementioned triggering method for the CFB/CD service.

According to the embodiment of the disclosure, the SCC AS sends the message carrying the information indicating that the called UE is in the busy state to the supplementary service AS, or, the SCC AS sends the message carrying the CD number to the supplementary service AS, so that a service logic of the service may be triggered on the supplementary service AS, and the problem of incapability of UE in implementing CFB and CD services after SRVCC switching in a conventional art is solved.

### BRIEF DESCRIPTION OF THE DRAWINGS

The drawings described here are adopted to provide further understanding of the disclosure, and form a part of the disclosure. Illustrative embodiments of the disclosure and description thereof are adopted to explain the disclosure and not intended to form improper limits to the disclosure. In the drawings:
Fig. 1 is a structure diagram of an IMS network according to the related technology;
Fig. 2 is a network structure diagram of SRVCC switching according to the related technology;
Fig. 3 is a flowchart of SRVCC switching according to the related technology;
Fig. 4 is a flowchart of a notification method for a CFB service according to an embodiment of the disclosure;
Fig. 5 is a flowchart of a notification method for a CD service according to an embodiment of the disclosure;
Fig. 6 is a flowchart of triggering an IMS forwarding service after SRVCC switching in case of separation of an SCC AS and an AS according to embodiment 1 of the disclosure;
Fig. 7 is a flowchart of triggering an IMS forwarding service after SRVCC switching in case of combination of an SCC AS and an AS according to embodiment 2 of the disclosure;
Fig. 8 is a structure diagram of a notification device for a CFB service according to an embodiment of the disclosure;
Fig. 9 is a structure diagram of a triggering device for a CFB service according to an embodiment of the disclosure;
Fig. 10 is a flowchart of a notification method for a CD service according to an embodiment of the disclosure;
Fig. 11 is a flowchart of a triggering method for a CD service according to an embodiment of the disclosure;
Fig. 12 is a flowchart of triggering an IMS deflection service after SRVCC switching in case of separation of an SCC AS and an AS according to embodiment 3 of the disclosure;
Fig. 13 is a flowchart of triggering an IMS deflection service after SRVCC switching in case of combination of an SCC AS and an AS according to embodiment 4 of the disclosure;
Fig. 14 is a structure diagram of a notification device for a CD service according to an embodiment of the disclosure; and
Fig. 15 is a structure diagram of a triggering device for a CD service according to an embodiment of the disclosure.

### DETAILED DESCRIPTION

It is important to note that embodiments in the disclosure and characteristics in the embodiments may be combined under the condition of no conflicts. The disclosure will be described below with reference to the drawings and the embodiments in detail.

The embodiment of the disclosure provides implementation solutions for a CFB service and a CD service. In the embodiment of the disclosure, the solution includes a notification method and a triggering method. The CFB service solution and the CD service solution of the embodiment of the disclosure will be described below respectively.

### 1. CFB service

According to one aspect of the embodiment of the disclosure, a notification method for a CFB service is provided, which, as shown in Fig. 4, includes the following steps:
Step 402: an MSC receives a first message carrying information indicating that called UE is in a busy state from the called UE,
   the MSC referring to an MSC server here; and
Step 404: the MSC sends a second message carrying the information indicating that the UE is in the busy state to an SCC AS to notify a supplementary service AS to trigger the CFB service.

According to the embodiment of the disclosure, the MSC receives the first message carrying the information indicating that the called UE is in the busy state from the called UE, and the second message carrying the information indicating that the called UE is in the busy state is sent to the SCC AS to notify the supplementary service AS to trigger the CFB service, so that the supplementary service AS may trigger the CFB service according to the information indicating that the called UE is in the busy state.

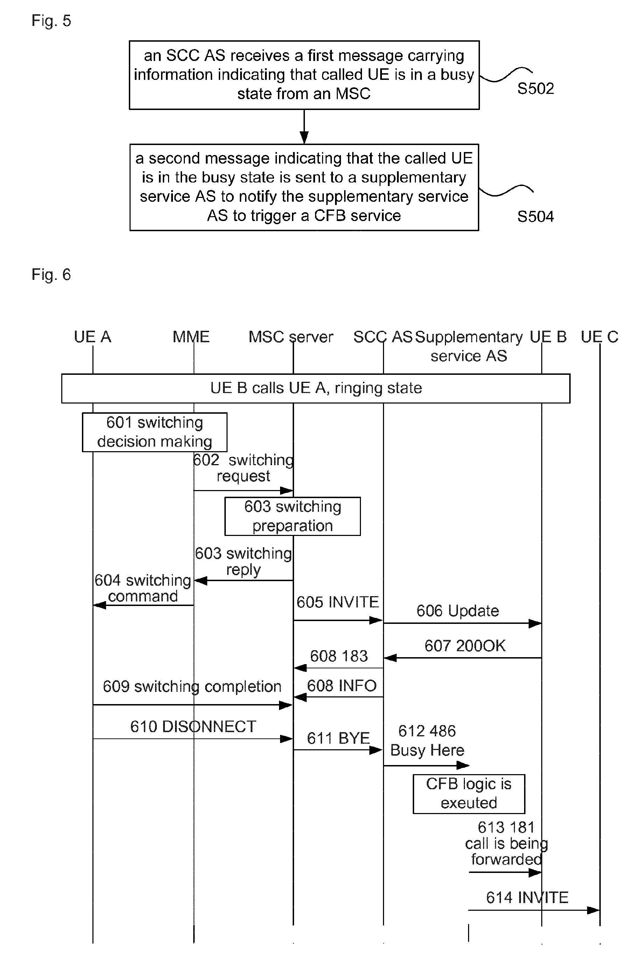

According to another aspect of the embodiment of the disclosure, a triggering method for a CFB service is correspondingly provided, which, as shown in Fig. 5, includes the following steps:
Step 502: an SCC AS receives a first message carrying information indicating that called UE is in a busy state from an MSC; and
Step 504: a second message indicating that the called UE is in the busy state is sent to a supplementary service AS to notify the supplementary service AS to trigger the CFB service.

According to the embodiment of the disclosure, the SCC AS receives the first message carrying the information indicating that the called UE is in the busy state from the MSC, and the second message carrying the information indicating that the called UE is in the busy state is sent to the supplementary service AS to notify the supplementary service AS to trigger the CFB service, so that the supplementary service AS may trigger the CFB service according to the information indicating that the called UE is in the busy state.

In order to make the technical solution and implementation method of the disclosure clearer, an implementation process will be described below with reference to preferred embodiments in detail.

### Embodiment 1

Fig. 6 is a flowchart of triggering an IMS CFB service after SRVCC switching in case of separation of an SCC AS and a supplementary service AS. Specific steps are as follows.

Step 601 to Step 609 are consistent with Step 301 to Step 309 in Fig. 3.

Step 610: UE A is in a busy state, and sends a DISCONNECT message to an MSC server, wherein a reason is that a user is busy.

Step 611: the MSC server sends a BYE or Cancel message to an SCC AS.

Here, the BYE or Cancel message carries a reason header field, the content is a SIP state code and a numerical value is 486. As an alternate method, the BYE or Cancel message may also carry text information in an Extensive Markup Language (XML) format to describe that the user is in the busy state.

Step 612: the SCC AS converts the BYE or Cancel message into a 486 Busy Here message for sending to a supplementary service AS after receiving the BYE or Cancel message.

Here, the message between the SCC AS and the supplementary service AS is forwarded through an S-CSCF according to a networking requirement of an IMS network.

Step 613: the supplementary service AS triggers a forwarding service logic after receiving the 486 Busy Here message, and sends 181 call is being forwarded to UE B to notify UE B that a current call has been forwarded.

Step 614: meanwhile, the supplementary service AS sends an INVITE message to UE C for forwarding to UE C.

### Embodiment 2

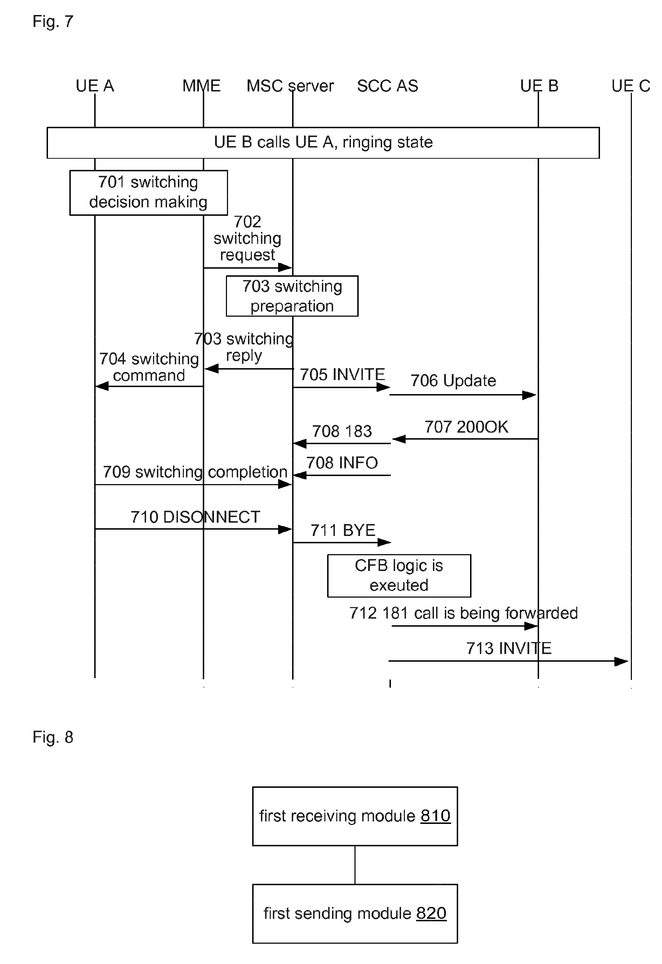

Fig. 7 is a flowchart of triggering an IMS forwarding service after SRVCC switching in case of combination of an SCC AS and an AS. Specific steps are as follows.

Step 701 to Step 709 are consistent with Step 301 to Step 309 in Fig. 3.

Step 710: UE A is in a busy state, and sends a DISCONNECT message to an MSC server, wherein a reason is that a user is busy.

Step 711: the MSC server sends a BYE and/or Cancel message to an SCC AS.

Here, the BYE and/or Cancel message carries a reason header field, the content is a SIP state code and a numerical value is 486. As an alternate method, the BYE or Cancel message may also carry text information in an XML format to describe that the user is in the busy state.

Step 712: after the SCC AS receives BYE and/or Cancel message, a supplementary service AS triggers a forwarding service logic, and sends 181 call is being forwarded to UE B to notify UE B that a current call has been forwarded.

Step 713: the SCC AS sends an INVITE message to UE C for forwarding to UE C.

According to the embodiment of the disclosure, a specified header field or text format description is carried in the BYE/Cancel message sent by the SRVCC switching MSC server, and the SCC AS receiving the message converts the message into a 486 message for CFB, so that the service logic of the service may be triggered on the supplementary service AS, and the problem of incapability of UE in implementing the CFB service after SRVCC switching in the conventional art is solved.

It is important to note that the steps shown in the flowcharts of the drawings may be executed in a computer system, such as a group of computers, capable of executing instructions, and moreover, although logic sequences are shown in the flowcharts, the shown or described steps may be executed in sequences different from the sequences described here under some circumstances.

The embodiment of the disclosure further provides a notification device for a CFB service, which is located in an MSC and may be configured to implement the abovementioned notification method. Fig. 8 is a structure diagram of a device according to an embodiment of the disclosure, and as shown in Fig. 8, the device includes: a first receiving module 810 and a first sending module 820, wherein
the first receiving module 810 is configured to receive a first message carrying information indicating that called UE is in a busy state from the called UE; and
the first sending module 820 is configured to send a second message carrying the information indicating that the called UE is in the busy state to an SCC AS to notify a supplementary service AS to trigger the CFB service.

During a practical application, the first receiving module 810 may be implemented by a receiver in the notification device for the CFB service, and the first sending module 820 may be implemented by a transmitter in the notification device for the CFB service.

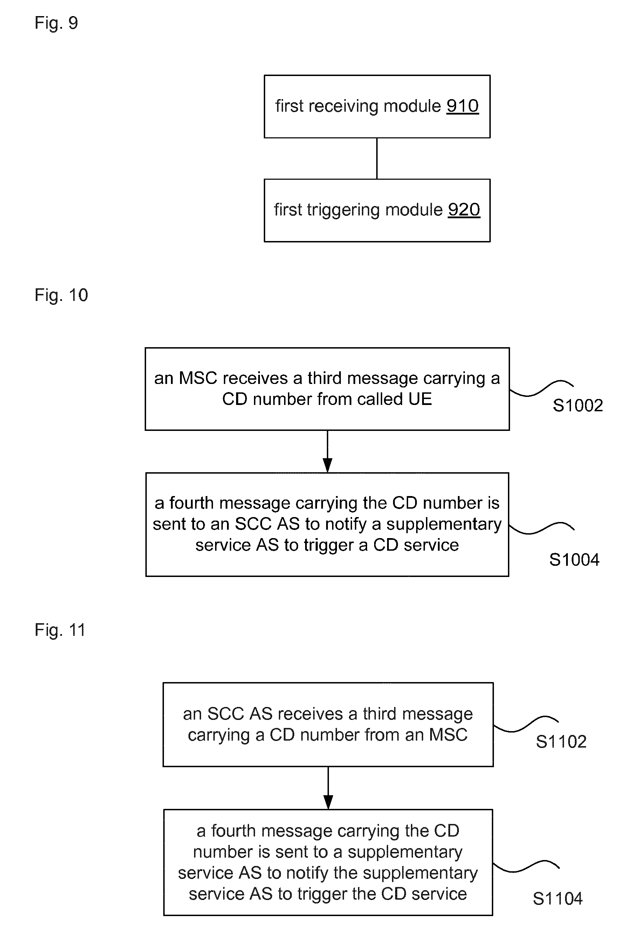

Correspondingly, the embodiment of the disclosure further provides a triggering device for a CFB service, which may be configured to implement the abovementioned triggering method. Fig. 9 is a structure diagram of a device according to an embodiment of the disclosure, and as shown in Fig. 9, the device includes: a first receiving module 910 and a first triggering module 920, wherein
the first receiving module 910 is configured to receive a first message carrying information indicating that called UE is in a busy state from an MSC; and
the first triggering module 920 is configured to send a second message indicating that the called UE is in the busy state to a supplementary service AS to notify the supplementary service AS to trigger the CFB service.

During a practical application, the first receiving module 910 may be implemented by a receiver in the triggering device for the CFB service, and the first triggering module 920 may be implemented by a transmitter in the triggering device for the CFB service.

### 2. CD service

The embodiment of the disclosure further provides a notification method for a CD service, which, as shown in Fig. 10, includes the following steps:
Step 1002: an MSC receives a third message carrying a CD number from called UE,
   the MSC referring to an MSC server here; and
Step 1004: a fourth message carrying the CD number is sent to an SCC AS to notify a supplementary service AS to trigger the CD service.

According to the embodiment of the disclosure, the MSC receives the third message carrying the CD number from the called UE, and sends the fourth message carrying information, sent by the called UE, with the CD number to the SCC AS to notify the supplementary service AS to trigger the CD service, so that the supplementary service AS may trigger the CD service according to the information with the CD number.

According to another aspect of the embodiment of the disclosure, a triggering method for a CD service is correspondingly provided, which, as shown in Fig. 11, includes the following steps:
Step 1102: an SCC AS receives a third message carrying a CD number from an MSC; and
Step 1104: a fourth message carrying the CD number is sent to a supplementary service AS to notify the supplementary service AS to trigger the CD service.

According to the embodiment of the disclosure, the SCC AS receives the third message carrying the CD number from the MSC, and sends the fourth message carrying information, with the CD number, of called UE to the supplementary service AS to notify the supplementary service AS to trigger the CD service, so that the supplementary service AS may trigger the CD service according to the information with the CD number.

### Embodiment 3

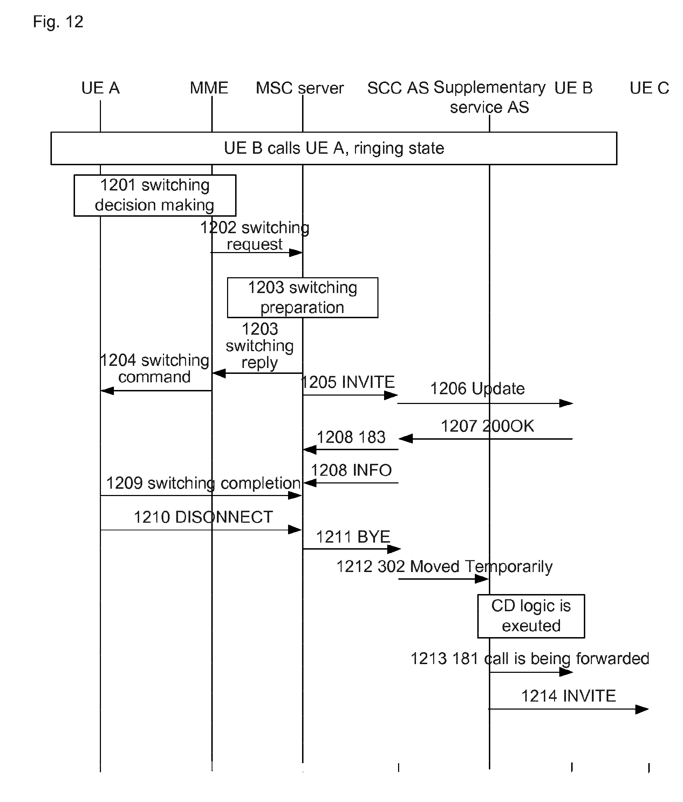

Fig. 12 is a flowchart of triggering an IMS CD service after SRVCC switching in case of separation of an SCC AS and a supplementary service AS. Specific steps are as follows (Step 1202 to Step 1214).

Step 1201 and Step 1209 are consistent with Step 301 to Step 309 in Fig. 3.

Step 1210: UE A triggers a CD service, and sends a DISCONNECT message to an MSC server, wherein a CD number is carried.

Step 1211: the MSC server sends a BYE and/or Cancel message to an SCC AS, wherein an XML describing a CD service request and the CD number is carried.

Here, the BYE and Cancel message further carries the CD number.

Step 1212: the SCC AS converts the BYE and/or Cancel message into a 302 message for sending to a supplementary service AS after receiving the BYE and/or Cancel message, wherein the CD number is carried.

Here, the 302 message is a 302 MOVED TEMPORARILY message.

The message between the SCC AS and the supplementary service AS is forwarded through an S-CSCF according to a networking requirement of an IMS network.

Step 1213: the supplementary service AS performs the CD service after receiving the 302 message, and sends 181 call is being forwarded to UE B to notify UE B that a current call has been deflected.

Step 1214: meanwhile, the supplementary service AS sends an INVITE message to UE C.

### Embodiment 4

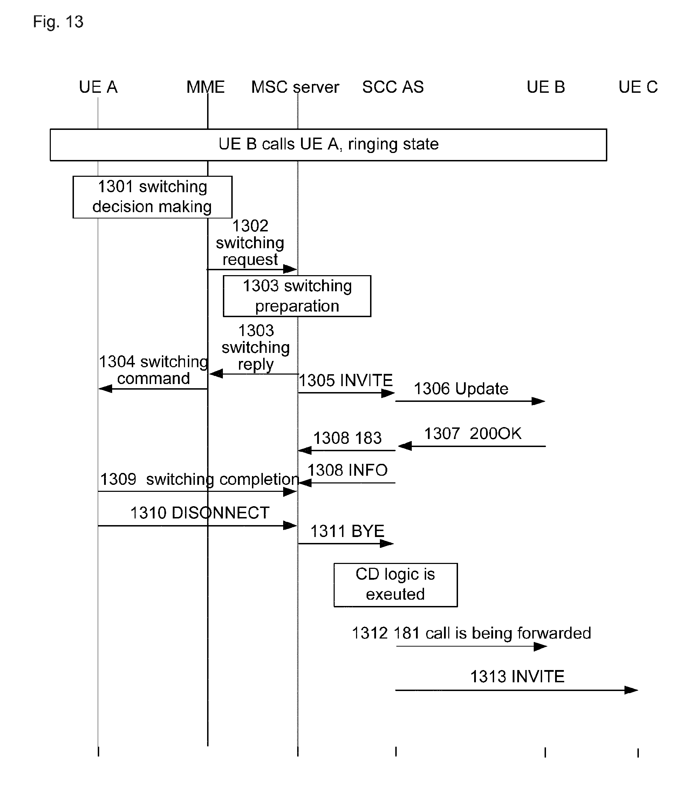

Fig. 13 is a flowchart of triggering an IMS CD service after SRVCC switching in case of combination of an SCC AS and a supplementary service AS. Specific steps are as follows.

Step 1301 to Step 1309 are consistent with Step 301 to Step 309 in Fig. 3.

Step 1310: UE A triggers a CD service, and sends a DISCONNECT message to an MSC server, wherein a CD number is carried.

Step 1311: the MSC server sends a BYE and/or Cancel message to an SCC AS, wherein an XML describing a CD service request and the CD number is carried.

Here, the BYE and Cancel message further carries the CD number.

Step 1312: after the SCC AS receives the BYE and/or Cancel message, a supplementary service AS triggers a CD service logic, and sends 181 call is being forwarded to UE B to notify UE B that a current call has been deflected.

Step 1313: meanwhile, the SCC AS sends an INVITE message to UE C.

According to the embodiment of the disclosure, a text format description is carried in the BYE/Cancel message sent by the SRVCC switching MSC server, and the SCC AS receiving the message converts the message into a 302 message for the CD service, so that the service logic of the service may be triggered on the supplementary service AS, and the problem of incapability of UE in implementing the CD service after SRVCC switching in the conventional art is solved.

It is important to note that the steps shown in the flowcharts of the drawings may be executed in a computer system, such as a group of computers, capable of executing instructions, and moreover, although logic sequences are shown in the flowcharts, the shown or described steps may be executed in sequences different from the sequences described here under some circumstances.

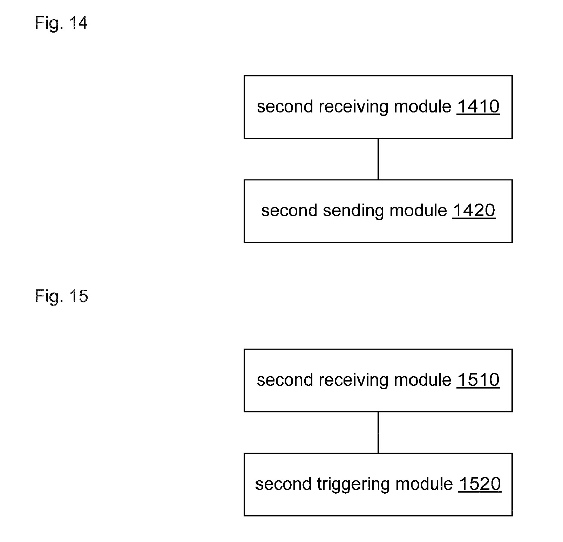

The embodiment of the disclosure further provides a notification device for a CD service, which is located in an MSC and may be configured to implement the abovementioned notification method. Fig. 14 is a structure diagram of a device according to an embodiment of the disclosure, and as shown in Fig. 14, the device includes: a second receiving module 1410 and a second sending module 1420, wherein
the second receiving module 1410 is configured to receive a third message carrying a CD number from called UE; and
the second sending module 1420 is configured to send a fourth message carrying the CD number to an SCC AS to notify a supplementary service AS to trigger the CD service.

During a practical application, the second receiving module 1410 may be implemented by a receiver in the notification device for the CD service, and the second sending module 1420 may be implemented by a transmitter in the notification device for the CD service.

Correspondingly, the embodiment of the disclosure further provides a triggering device for a CD service, which may be configured to implement the abovementioned triggering method. Fig. 15 is a structure diagram of a device according to an embodiment of the disclosure, and as shown in Fig. 15, the device includes: a second receiving module 1510 and a second triggering module 1520, wherein
the second receiving module 1510 is configured to receive a third message carrying a CD number from an MSC; and
the second triggering module 1520 is configured to send a fourth message carrying the CD number to a supplementary service AS to notify the supplementary service AS to trigger the CD service.

During a practical application, the second receiving module 1510 may be implemented by a receiver in the triggering device for the CD service, and the second triggering module 1520 may be implemented by a transmitter in the triggering device for the CD service.

It is important to note that the notification/triggering device for the CFB/CD service in the device embodiment corresponds to the method embodiment, and its specific implementation process has been described in the method embodiment in detail, and will not be elaborated herein.

According to the embodiment of the disclosure, CFB and CD flows after SRVCC switching are optimized under the condition of minimizing changes and influence of an existing system, service information of a user is carried in a BYE/Cancel message, and CFB and CD service logics of the user are triggered on an AS, thereby meeting a subscription requirement of the user.

From the above, according to the embodiment of the disclosure, the problem of incapability of UE in implementing CFB and CD services after SRVCC switching in the conventional art is solved.

Those skilled in the art should know that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory, an optical memory and the like) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the disclosure, and for those skilled in the art, the disclosure may have various modifications and variations. Any modifications, equivalent replacements, improvements and the like made within the spirit and principle of the disclosure shall fall within the scope of protection of the disclosure.

## Claims

1. A notification method for a Call Forwarding on Busy/Call Deflection (CFB/CD) service, comprising:
when the CFB service is required, receiving, by a Mobile Switch Centre (MSC), a first message carrying information indicating that called User Equipment (UE) is in a busy state from the called UE; sending a second message carrying the information indicating that the called UE is in the busy state to a Service Centralization and Continuity Application Server (SCC AS) to notify a supplementary service AS to trigger the CFB service; or
when the CD service is required, receiving, by the MSC, a third message carrying a CD number from the called UE; and sending a fourth message carrying the CD number to the SCC AS to notify the supplementary service AS to trigger the CD service.

2. The method according to claim 1, wherein receiving, by the MSC, the first message carrying the information indicating that the called UE is in the busy state from the called UE comprises:
receiving, by the MSC, a DISCONNECT message from the called UE, wherein a reason indicated in the DISCONNECT message is that the called UE is in the busy state.

3. The method according to claim 1, wherein receiving, by the MSC, the third message carrying the CD number from the called UE comprises:
receiving, by the MSC, a DISCONNECT message from the called UE, wherein the DISCONNECT message carries the CD number.

4. The method according to claim 1 or 2, wherein sending the second message carrying the information indicating that the called UE is in the busy state to the SCC AS comprises:
sending a BYE message and/or a CANCEL message to the SCC AS, the BYE message and the CANCEL message carrying the information indicating that the called UE is in the busy state.

5. The method according to claim 1 or 3, wherein sending the fourth message carrying the CD number to the SCC AS comprises:
sending a BYE message and/or a CANCEL message to the SCC AS, wherein the BYE message and the CANCEL message carry the CD number and/or text information, and the text information is configured to describe a CD service request and the CD number.

6. The method according to claim 4, wherein the BYE message and the CANCEL message carrying the information indicating that the called UE is in the busy state comprise at least one of:
the BYE message and the CANCEL message carrying a REASON header field, and the content of the REASON header field being a Session Initiation Protocol (SIP) state code indicating that the called UE is in the busy state; and
the BYE message and the CANCEL message carrying text information describing that the called UE is in the busy state.

7. A triggering method for a Call Forwarding on Busy/Call Deflection (CFB/CD) service, comprising:
when the CFB service is required, receiving, by a Service Centralization and Continuity Application Server (SCC AS), a first message carrying information indicating that called User Equipment (UE) is in a busy state from a Mobile Switch Centre (MSC); sending a second message indicating that the called UE is in the busy state to a supplementary service AS to notify the supplementary service AS to trigger the CFB service; or
when the CD service is required, receiving, by the SCC AS, a third message carrying a CD number from the MSC; and sending a fourth message carrying the CD number to the supplementary service AS to notify the supplementary service AS to trigger the CD service.

8. The method according to claim 7, wherein receiving, by the SCC AS, the first message carrying the information indicating that the called UE is in the busy state from the MSC comprises:
receiving, by the SCC AS, a BYE message and/or a CANCEL message, the BYE message and the CANCEL message carrying the information indicating that the called UE is in the busy state.

9. The method according to claim 7, wherein receiving, by the SCC AS, the third message carrying the CD number from the MSC comprises:
receiving, by the SCC AS, a BYE message and/or a CANCEL message, wherein the BYE message and the CANCEL message carry the CD number and/or text information, and the text information is configured to describe a CD service request and the CD number.

10. The method according to claim 7 or 8, wherein the second message, sent to the supplementary service AS, indicating that the called UE is in the busy state is a 486 Busy Here message.

11. The method according to claim 7 or 9, wherein the fourth message, sent to the supplementary service AS, carrying the CD number is a 302 MOVED TEMPORARILY message.

12. The method according to claim 8, wherein the BYE message and the CANCEL message carrying the information indicating that the called UE is in the busy state comprise at least one of:
the BYE message and the CANCEL message carrying a REASON header field, and the content of the REASON header field being a Session Initiation Protocol (SIP) state code indicating that the called UE is in the busy state; and
the BYE message and the CANCEL message carrying text information describing that the called UE is in the busy state.

13. A notification device for a Call Forwarding on Busy/Call Deflection (CFB/CD) service, comprising: a first receiving module and a first sending module, wherein the first receiving module is configured to, when the CFB service is required, receive a first message carrying information indicating that called User Equipment (UE) is in a busy state from the called UE; and wherein the first sending module sends a second message carrying the information indicating that the called UE is in the busy state to a Service Centralization and Continuity Application Server (SCC AS) to notify a supplementary service AS to trigger the CFB service; or
the device comprising: a second receiving module and a second sending module, wherein the second receiving module is configured to, when the CD service is required, receive a third message carrying a CD number from the called UE; and wherein the second sending module is configured to send a fourth message carrying the CD number to the SCC AS to notify the supplementary service AS to trigger the CD service.

14. The device according to claim 13, wherein the operation that the first receiving module receives the first message carrying the information indicating that the called UE is in the busy state from the called UE comprises:
receiving a DISCONNECT message from the called UE, wherein a reason indicated in the DISCONNECT message is that the called UE is in the busy state.

15. The device according to claim 13, wherein the operation that the second receiving module receives the third message carrying the CD number from the called UE comprises:
receiving a DISCONNECT message from the called UE, wherein the DISCONNECT message carries the CD number.

16. The device according to claim 13 or 14, wherein the operation that the first sending module sends the second message carrying the information indicating that the called UE is in the busy state to the SCC AS comprises:
sending a BYE message and/or a CANCEL message to the SCC AS, the BYE message and the CANCEL message carrying the information indicating that the called UE is in the busy state.

17. The device according to claim 13 or 15, wherein the operation that the second sending module sends the fourth message carrying the CD number to the SCC AS comprises:
sending a BYE message and/or a CANCEL message to the SCC AS, wherein the BYE message and the CANCEL message carry the CD number and/or text information, and the text information is configured to describe a CD service request and the CD number.

18. The device according to claim 16, wherein the BYE message and the CANCEL message carrying the information indicating that the called UE is in the busy state comprise at least one of:
the BYE message and the CANCEL message carrying a REASON header field, and the content of the REASON header field being a Session Initiation Protocol (SIP) state code indicating that the called UE is in the busy state; and
the BYE message and the CANCEL message carrying text information describing that the called UE is in the busy state.

19. A triggering device for a Call Forwarding on Busy/Call Deflection (CFB/CD) service, comprising: a first receiving module and a first triggering module, wherein the first receiving module is configured to, when the CFB service is required, receive a first message carrying information indicating that called User Equipment (UE) is in a busy state from a Mobile Switch Centre (MSC); and wherein the first triggering module is configured to send a second message indicating that the called UE is in the busy state to a supplementary service Application Server (AS) to notify the supplementary service AS to trigger the CFB service; or
the device comprising: a second receiving module and a second triggering module, wherein the second receiving module is configured to, when the CD service is required, receive a third message carrying a CD number from the MSC; and wherein the second triggering module is configured to send a fourth message carrying the CD number to the supplementary service AS to notify the supplementary service AS to trigger the CD service.

20. The device according to claim 19, wherein the operation that the first receiving module receives the first message carrying the information indicating that the called UE is in the busy state from the MSC comprises:
receiving a BYE message and/or a CANCEL message, the BYE message and the CANCEL message carrying the information indicating that the called UE is in the busy state.

21. The device according to claim 19, wherein the operation that the second receiving module receives the third message carrying the CD number from the MSC comprises:
receiving a BYE message and/or a CANCEL message, wherein the BYE message and the CANCEL message carry the CD number and/or text information, and the text information is configured to describe a CD service request and the CD number.

22. The device according to claim 19 or 20, wherein the second message, sent to the supplementary service AS by the first triggering module, indicating that the called UE is in the busy state is a 486 Busy Here message.

23. The device according to claim 19 or 21, wherein the fourth message, sent to the supplementary service AS by the second triggering module, carrying the CD number is a 302 MOVED TEMPORARILY message.

24. The device according to claim 20, wherein the BYE message and the CANCEL message carrying the information indicating that the called UE is in the busy state comprise at least one of:
the BYE message and the CANCEL message carrying a REASON header field, and the content of the REASON header field being a Session Initiation Protocol (SIP) state code indicating that the called UE is in the busy state; and
the BYE message and the CANCEL message carrying text information describing that the called UE is in the busy state.

25. A computer storage medium having stored therein a set of instructions that, when executed, cause at least one processor to execute the notification method for a Call Forwarding on Busy/Call Deflection (CFB/CD) service according to any one of claims 1 to 6 or the triggering method for a CFB/CD service according to any one of claims 7 to 12.
